# EUROPEAN PATENT SPECIFICATION

(11) **EP 1 498 255 B1**
(45) Date of publication and mention of the grant of the patent: **12.09.2007**
(21) Application number: 03016197.0
(22) Date of filing: 17.07.2003
(51) Int. Cl.: B29C 47/76, B29C 47/10

(54) **Extrusion method for the production of filled thermoplasts**
Extrusionsverfahren zur Herstellung von gefüllten Thermoplasten
Procédé d'extrusion pour produire des matières thermoplastiques chargées

(43) Date of publication of application: 19.01.2005
(73) Proprietor: Borealis Technology Oy, 06201 Porvoo (FI)
(72) Inventor: Zopf, Ernst Ing., 4222 St. Georgen/Gusen (AT); Jarzombek, Manfred, 4040 Linz (AT); Eggetsberger, Mario, 4615 Holzhausen (AT); Gruber, Marcus, 4020 Linz (AT); Prokschi, Hermann, 4231 Untergaisbach (AT)
(74) Representative: Grünecker, Kinkeldey, Stockmair & Schwanhäusser Anwaltssozietät

(56) References cited:
- WO-A-99/15324
- WO-A-03/029078
- GB-A- 2 075 353
- US-A- 3 969 314
- US-A- 5 876 647
- K-M HESS: "Fortschritte beim Herstellen gefüllter Kunststoffe" KUNSTSTOFFE, CARL HANSER VERLAG. MUNCHEN, DE, vol. 73, no. 6, 1 June 1983 (1983-06-01), pages 282-286, XP002029464 ISSN: 0023-5563

## Description

The invention refers to a process for the production of filled thermoplasts, having a high productivity.

### Background of the Invention

Many thermoplasts contain fillers, either in order to enhance the properties of the thermoplast in one or the other direction or in order to reduce the costs by adding a low price filler. A combination of both targets is desirable.

In order to achieve optimal properties of the filled thermoplast agglomeration of the filler must be avoided, and the filler or the fillers must be uniformly dispersed in the thermoplast. This is fulfilled, as soon as any filler particle is completely coated by the thermoplast which means that no filler particle touches directly another filler particle.

Favourable properties of a filled thermoplast can be reached with fillers having a special structure, such as for example talc. Special advantages of talc filled thermoplasts are stiffness, heat resistance and lower shrinkage.

Talc has the structure of platelets which fortunately do not tend to agglomerate surface on surface, as soon as they are fully dispersed in the thermoplast.

In order to fully take advantage of the properties of talc, the talc particles should be rather small.

The bulk density of commercially available talc is in the range of 0,23 - 0,26 g/cm³. Taking into consideration that talc is a hydrophobic and inert hydrated magnesium sheet silicate having the chemical formula of Mg₃Si₄O₁₀(OH)₂ and having a density of 2,78 g/cm³, more than 90 % of the bulk volume is air. Together with the molten polymer this amount of air must be transported together with the filler from the sidefeeder to the first degassing station. Of course the conveying conditions for air are completely different from the conveying conditions for polymer and filler, nevertheless a significant portion of the free volume of the extruder is spent for transporting useless air. In other words, the output rate of the extruder drops and is insufficient.

US 5876647 discloses a method for preparing conductive thermoplastic resin compositions by kneading in carbon black or carbon-black containing master batch pellets in an extruder. The mixture is degassed under ordinary pressure.

WO 03029078 discloses an apparatus and a method for increasing the density of finely divided particulate material using compressing force. The compressed air escapes through vents in the housing, which vents are susceptible to clogging and need to be cleaned.

### Object of the Invention

The object of the invention is therefore to reduce or eliminate the amount of air which accompanies the filler and thereby increasing the through-put of the thermoplast-filler mixture through the extruder which significantly improves the output of filled thermoplast.

### Detailed description of the invention

Surprisingly it has been found that the through-put through a extruder can be significantly increased, if the degassing vacuum in a extruder is retroactive to the side feeder and the side feeder is operated in such a way that the filler therein seals against the vacuum.

The present invention therefore relates to a process for the production of filled thermoplasts, wherein in the first section of a extruder a thermoplast is fed in and molten, in the beginning of the second section a filler is added via a sidefeeder, in the third section vacuum is applied which reaches back into the sidefeeder to evacuate the air and at the end of the fourth section the moiety is degassed from volatiles, pressure is built up and extruded to give the filled thermoplast as pellet, semi-finished or finished product.

In carrying out the invention a thermoplast in the form of powder flakes or pellets is fed to a compounding extruder and molten in a first section of the extruder. The thermoplast can be polyolefins such as polyethylenes, polypropylenes and their copolymers, polyamides such as nylon 6, nylon 66, polyethers or polyesters.

The preferred thermoplasts are polyethylenes, polypropylenes and their copolymers. The thermoplasts can contain additives such as stabilizers, pigments, coupling and other agents.

In the beginning of the second section the filler is added via a sidefeeder to the melt. There can also be more than one sidefeeder.

Examples for fillers are mineral fillers like talc, chalk, caoline, wollastonite, magnesium oxide, barium sulfate, glass bubbles or metal powder, organic fillers like saw dust, melamine etc. Further examples are chopped mineral-, synthetic- or natural fibres such as glass fibres, metallic fibres, aramide fibres, carbon fibres, cotton fibres, unmodified or modified cellulosic fibres, hemp, jute, sisal or flax.

The preferred fillers are talc, wollastonite or chalk. Talc has a particle size of from 2 to 60 µm, any type of talc can be used, including compact or compacted talc which still contains air between the compact pieces. The most common commercially available and used particle sizes of talc are 20 pm, 7 µm or 3 µm.

The second section further contains means for heating, transporting, distributing, dispersing, kneading and mixing the components. Such means are applied in different kind, different number and different sequence, depending on the kind and structure of the thermoplast, kind and structure of the filler, the viscosity, the temperature of the moiety etc.

In the third section a vacuum is applied which reaches back into the sidefeeder in order to evacuate the air from the filler. Since the vacuum reaches back into the sidefeeder, the filler is thereby compressed in the sidefeeder and forms there a seal against the vacuum. Filler and air are sucked into section two, the filler is taken up by the polymer melt and simultaneously the accompanying superfluous air is sucked out by the vacuum.

The filling degree of this area is higher, therefore the through-put of the components is higher and consequently the output of the filled thermoplast is significantly increased.

It is important that the evacuation is performed in the third section of the extruder and not already soon after the sidefeeder, since the filler must be already worked into the thermoplast. Otherwise that part of the filler which is not yet worked in would be carried along together with the superfluous air. Filler would be lost and thereby pollute the surrounding area.

The third and fourth section also contain means for conveying and mixing. At the end of the fourth section the moiety is degassed in order to eliminate volatiles which are in the melt and/or have been built during processing. Right after this degassing some pressure must be built up with the appropriate means which is necessary in order to press the filled thermoplast through the die plate.

The filled thermoplast can finally be obtained in any desired form, either in the form of pellets or granules or directly in the form of semi finished or finished products.

Examples of such products are plates, pipes, automotive parts like dashboards, bumpers, silfinishers, small appliances or white goods.

### Example 1

A corotating twin screw extruder, Wemer & Pfleiderer ZSK40 having a screw speed of 300 rpm and a temperature profile of 190/220/225/230/230/230/220/210/200 °C was fed in the first section of the extruder with a mixture of 32,5 % by weight of an elastomeric modified PP-homopolymer having an MFR (230 °C/2,16 kg) of 35 and 32 % by weight of an elastomeric modified PP copolymer, having an MFR (230 °C/2,16 kg) of 12 and 7,5 % by weight of stabilizers and additives.

At the beginning of the second section via the sidefeeder 28 % by weight of talc having a particle size of 20 µm were added, and a vacuum was applied in the third section of the extruder being retroactive to the sidefeeder. The sidefeeder was fully operated. At the end of section four of the extruder the moiety was degassed in order to eliminate volatiles, pressure was built up and the filled thermoplast was obtained in the form of pellets after passing the die plate.

The maximum through-put of the talc filled thermoplast was 130 kg/h.

### Comparative example:

Using the same extruder configuration, working parameters and material as in Example 1 with the exception that instead of evacuating retroactive to the sidefeeder the area after the sidefeeder was only connected to an atmospheric vent.

The maximum through-put of the talc filled thermoplast was 90 kg/h.

## Claims

1. Process for the production of filled thermoplasts, **characterised in that** in the first section of a extruder a thermoplast is fed in and molten, in the beginning of the second section a filler is added via a sidefeeder, in the third section vacuum is applied which reaches back into the sidefeeder to evacuate the air and at the end of the fourth section the moiety is degassed from volatiles, pressure is built up and extruded to give the filled thermoplast as pellet, semi-finished or finished product.

2. The process as claimed in claim 1, **characterised in that** the thermoplast is selected from the group consisting of polyolefins, their copolymers and polyamides.

3. The process as claimed in claim 1, **characterised in that** the thermoplast is selected from the group consisting of polyethylenes and polypropylenes and their copolymers.

4. The process as claimed in claim 1, **characterised in that** the filler is selected from the group consisting of mineral fillers or organic fillers.

5. The process as claimed in claim 1, **characterised in that** the filler is selected from the group consisting of talc, wollastonite or chalk.

## Patentansprüche

1. Verfahren zur Herstellung gefüllter Thermoplasten, **dadurch gekennzeichnet, dass** in einem ersten Abschnitt eines Extruders ein Thermoplast eingeführt und geschmolzen wird, in dem Anfang des zweiten Abschnitts ein Füllstoff über eine Seitenzuführung zugegeben wird, in dem dritten Abschnitt Vakuum angelegt wird, welches sich zurück bis zu der Seitenzuführung erstreckt, um die Luft zu evakuieren, und wobei an dem Ende des vierten Abschnitts der Teil von flüchtigen Anteilen entgast wird, Druck aufgebaut und extrudiert wird, um den gefüllten Thermoplast als Pellet, Halbfertig- oder Fertigprodukt zu erzielen.

2. Verfahren nach Anspruch 1, **dadurch gekennzeichnet, dass** der Thermoplast aus der Gruppe gewählt ist, welche aus Polyolefinen, ihren Copolymeren und Polyamiden besteht.

3. Verfahren nach Anspruch 1, **dadurch gekennzeichnet, dass** der Thermoplast aus der Gruppe gewählt ist, welche aus Polyethylenen und Polypropylenen und deren Copolymeren besteht.

4. Verfahren nach Anspruch 1, **dadurch gekennzeichnet, dass** der Füllstoff aus der Gruppe gewählt ist, welche aus mineralischen Füllstoffen und organischen Füllstoffen besteht.

5. Verfahren nach Anspruch 1, **dadurch gekennzeichnet, dass** der Füllstoff aus der Gruppe gewählt ist, welche aus Talk, Wollastonit oder Kreide besteht.

## Revendications

1. Procédé de production de matières thermoplastiques chargées, **caractérisé en ce qu'**une matière thermoplastique est amenée et fondue dans le premier tronçon d'une extrudeuse, une charge est ajoutée via un dispositif d'alimentation latérale au début du deuxième tronçon, un vide est appliqué dans le troisième tronçon, vide qui remonte dans le dispositif d'alimentation latérale pour évacuer l'air, et à l'extrémité du quatrième tronçon, la fraction est dégazée des substances volatiles, une pression est créée et ladite fraction est extrudée pour fournir la matière thermoplastique chargée sous forme de pastilles, de produit fini ou semi-fini.

2. Procédé selon la revendication 1, **caractérisé en ce que** la matière thermoplastique est sélectionnée dans le groupe constitué de polyoléfines, de leurs copolymères et de polyamides.

3. Procédé selon la revendication 1, **caractérisé en ce que** la matière thermoplastique est sélectionnée dans le groupe constitué de polyéthylènes et polypropylènes, et de leurs copolymères.

4. Procédé selon la revendication 1, **caractérisé en ce que** la charge est sélectionnée dans le groupe constitué de charges minérales et de charges organiques.

5. Procédé selon la revendication 1, **caractérisé en ce que** la charge est sélectionnée dans le groupe constitué du talc, de la wollastonite et de la craie.
